# EUROPEAN PATENT APPLICATION

(11) **EP 4 531 012 A1**
(43) Date of publication of application: **02.04.2025**
(21) Application number: 23200492.9
(22) Date of filing: 28.09.2023
(51) Int. Cl.: G07F 17/12, G06Q 10/00, B65D 25/20, A47G 29/14, G06Q 10/0836

(54) **AUTOMATED PARCEL SYSTEM FOR STORAGE OF PARCELS AND RELEASING PARCELS TO A RECIPIENT**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

An automated parcel system (10) for storage of parcels and releasing parcels to a recipient, the automated parcel system (10) comprising
- a package storage unit (20) comprising
- a plurality of first parcel attachment means (22) arranged in a pattern, the plurality of first parcel attachment means (22) being attached to one or more surfaces;

- at least one package (50) releasably attached to at least one of the plurality of first parcel attachment means (22), the at least one package (50) comprises
- a package gate (52) enabling access to an internal space (54) of the package (50);
- a second parcel attachment means (56) complimentary to the first parcel attachment means (22), wherein the second parcel attachment means (56) being releasable attached to the first parcel attachment means (22);
- a package energy storage (58) configured for powering the package (50);
- a package communication unit (60) adapted for communication with external devices;
- a package controller (62) comprising a processor (64), a computer-readable memory (66) having stored thereon a computer program causing the processor (64) to release the second parcel attachment means (56) from the first parcel attachment means (22) as a function of received instruction from the external devices through the package communication unit (60).

## Description

### Field of the Invention

The present invention relates to an automated parcel system, a package storage unit, and a package, wherein the package storage unit and the package comprise complementary first attachment means and second attachment means. The package storage unit can be installed very fast and efficiently since the package storage does not include any electronics, thereby any roll-out can be performed at an even greater rate than known lean lockers.

### Background of the Invention

Automated parcel lockers have been important for reducing the last mile costs as the parcels can be delivered to a location close to the recipient, who can then collect the parqcel from automated parcel lockers. A specific type of automated parcel lockers are lean lockers, which have a local energy storage, typically in the form of a battery, powering the lean locker for 5, or 8, or 10, or more years. Lean lockers can be rolled out at a greater rate than conventional on-grid parcel lockers and lean lockers can be installed at more locations due to being self-sufficient in power.

However, the lean lockers still have insufficiencies as the material costs are relatively high due to the lean lockers having to be functional with limited maintenance for preferably at least 10 years. Today, an item is sent inside a single-use cardboard package and is then stored within a compartment of the lean locker or automated parcel locker. The purpose of the compartment is to prevent theft and protect against the weather.

The material costs for the compartments constitute over 40 % of the cost of the lean locker, the cost is further increased when including the battery and electronics. Thus, there is a need for an automated parcel locker which can be produced with less material while still maintaining the range of possible locations of the lean locker while preferably increasing the number of possible positions for pick up.

### Object of the Invention

An object of the invention is to provide an automated parcel system designed such that the required material is reduced compared to known automated parcel lockers or lean lockers, thereby reducing the total cost for performing roll out of automated parcel systems in an area.

### Description of the Invention

An object of the invention is achieved by an automated parcel system for storage of parcels and releasing parcels to a recipient, the automated parcel system comprising
- a package storage unit comprising
   - a plurality of first parcel attachment means arranged in a pattern, the plurality of first parcel attachment means being attached to one or more surfaces;
- at least one package releasably attached to at least one of the plurality of first parcel attachment means, the at least one package comprises
   - a package gate enabling access to an internal space of the package;
   - a second parcel attachment means complimentary to the first parcel attachment means, wherein the second parcel attachment means is releasably attached to the first parcel attachment means;
   - a package energy storage configured for powering the package;
   - a package communication unit adapted for communication with external devices;
   - a package controller comprising a processor and computer-readable memory having stored thereon a computer program causing the processor to release the second parcel attachment means from the first parcel attachment means as a function of received instruction from the external devices through the package communication unit.

The automated parcel system differs from lean lockers or automated parcel lockers by not having any compartments. Instead, the package constitutes in itself the compartment, which is more than sufficient provided that the package cannot be removed from the package storage unit without releasing the second parcel attachment means. The external device may be a smartphone, or a computer near the automated parcel system, or a pin pad in wireless communication with the package controller.

In traditional lean parcel lockers, the parcel locker is "smart" while the package is "dumb". In the present invention, the package storage unit is "dumb" while the package is "smart". This enables that the package storage unit can be positioned at even more locations, because the pattern of first parcel attachment means is adaptable. Furthermore, during installation there is no required check of the mechanics, hence the installation is performed by installing the the first parcel attachment means followed by sending a communication to a distribution server that the location has been installed. The distribution server may after receiving the communication begin to assign parcels to the package storage unit. The pattern and location will typically have been chosen ahead of the installation, thus the server is not required to receive any information other than that the package storage unit has been installed. This is simpler than present parcel lockers where the distribution server is required to know the specific parcel locker such that the encryption keys used for communication are correct as otherwise the system would not work.

The plurality of the first parcel attachment means may be two, three, four, or more first parcel attachment means. In known parcel lockers it is not uncommon to have 12, or 14, or 16, or more compartments, hence the plurality of the first parcel attachment means may include a similar or greater number. The pattern of first parcel attachment means could in theory be a non-repeating pattern, or a repeating pattern, or a grid pattern with equal distance to neighbouring first parcel attachment means along one or two axes. The pattern is preferably a grid pattern with equal distance to neighbouring first parcel attachment means along at least one axis.

A package gate may include a zipper enabling access to the internal space by unzipping, or the package gate may include hook and loop tape, or the package gate may include tape with adhesive or other solutions. Thereby, the item stored inside the package is available through the package gate. A recipient gain access to the internal space trough the package gate.

The pattern of first parcel attachment means may be in the form of rows and columns having equal distance between columns and equal distance between rows. Thereby, the pattern is such that from one first parcel attachment means to a neighbouring first parcel attachment means it is the same within the same row and the same within the same column.

In an aspect, at least one of the plurality of first parcel attachment means may comprise
- a latch striker or
- one or more cavities; or
- a dovetail socket.

Each of these solutions will enable a package with a complementary second parcel attachment to attach the package to the latch striker or one or more cavities or dovetail sockets with simple means.

In an aspect, the second parcel attachment means may include a displaceable member and a motor, wherein activation of the motor causes the member to be displaced between an attachment position wherein the member can engage one of the plurality of first parcel attachment means and a released position, where the member is released from one of the plurality of first parcel attachment means. This will enable the second parcel attachment means to engage the first parcel attachment means, which may be in the form of a dovetail socket or a cavity or a latch striker.

The displaceable member may be substantially straight and be displaced linearly along an axis. In other embodiments, the displaceable member may be substantially curved and be displaced by rotating relative to an axis. The displaceable member may include a pointed end for engaging a dovetail socket or a cavity or a latch striker.

In an aspect, the automated parcel system may comprise
- one or more pylons, each pylon equipped with at least one of the first parcel attachment means or preferably with a plurality of the first parcel attachment means.

Thereby, a simple pylon can be produced with the one, or two, or three, or four, or five, or seven, or ten, or fifteen, or twenty, or 25, or 30, or more first parcel attachment means. The pylon may be a cylinder with a substantially circular cross-section, or a substantially rectangular cross-section, or with more sides. Pylons can easily be positioned in a series next to one another, thereby forming a pattern defined by the first parcel attachment means and the distance between the pylons.

In an aspect, the automated parcel system may comprise one or more anchor elements, wherein at least one of the one or more pylons extends from the one or more anchor elements. Thereby, the pylons can be installed at any location in a fast and efficient manner by simply placing the one or more anchor elements on a suitable surface.

The anchor elements may be foundation elements adapted for placement on a substantially horizontal surface such as pavement or the like.

In an aspect, the at least one package may comprise two second parcel attachment means engaging two first parcel attachment means. Thereby, large package having a size such that the package will extend between the first parcel attachment means. The first parcel attachment means does not need to be neighbouring first parcel attachment means, hence there can be one or more neighbouring first parcel attachment means between the two first parcel attachment means.

The at least one package comprises a plurality of second parcel attachment means forming a pattern complementary to all or at least a part of the pattern of first parcel attachment means. Thereby, the automated parcel system will be able to handle packages of various different shapes and sizes, since there are no compartment sizes restricting the automated parcel system as there are in legacy systems.

In an aspect, the second parcel attachment means may be rigidly connected to a bottom of the package. Thereby, the package becomes more rigid, which prevents the package from deforming over time due to the weight of item within the package.

In an aspect, a wire interconnects the first parcel attachment means and the second parcel attachment means. In some cases, the size or shape of the package may prevent a direct connection between the first parcel attachment means and the second parcel attachment means.

An object of the invention is achieved by a package adapted for being releasably attached to at least one of the plurality of first parcel attachment means of an automated parcel system, the at least one package comprises
- a package gate enabling access to an internal space of the package;
- a second parcel attachment means for releasable attachment to a first parcel attachment means of an automated parcel system, wherein the second parcel attachment means is configured for releasable attachment to the first parcel attachment means;
- a package energy storage configured for powering the package;
- a package communication unit adapted for communication with external devices;
- a package controller comprising a processor and a computer-readable memory having stored thereon a computer program causing the processor to lock or release the second parcel attachment means as a function of received instruction from the external devices through the package communication unit.

The package can, using the second parcel attachment means, be attached to or released from a complementary first parcel attachment means. This enables the first parcel attachment means to become "dumb" i.e., the first parcel attachment means may be purely mechanical as no intelligence is needed. This is contrary to parcel lockers where the parcel locker is required to have various controllers including computer programs for communicating and syncing with a distribution server. The first parcel attachment means does also not require any hardwired power or a battery pack.

In an aspect, the second parcel attachment means may include a displaceable member and a motor, wherein activation of the motor causes the member to be displaced between an attachment position, wherein the member can engage one of the plurality of first parcel attachment means, and a released position, where the member is released from one of the plurality of first parcel attachment means. This will enable the second parcel attachment means to engage the first parcel attachment means, which may be in the form of a dovetail socket or a cavity, or a latch striker.

The displaceable member may be substantially straight and be displaced linearly along an axis. In other embodiments, the displaceable member may be substantially curved and be displaced by rotating relative to an axis. The displaceable member may include a pointed end for engaging a dovetail socket, a cavity, or a latch striker.

An object of the invention is achieved by a package storage unit comprising
- a plurality of first parcel attachment means arranged in a pattern, the plurality of first parcel attachment means being attached to one or more surfaces.

The package storage unit can due to the pattern of the first parcel attachment means be able to accommodate many different sizes and shapes of packages, since the package storage unit is not restricted by compartments having a specific shape and a specific size. Thus, the package storage unit can accommodate a greater range of packages than known parcel lockers.

In an aspect, at least one of the plurality of first parcel attachment means comprises
- a latch striker or
- one or more cavities; or
- a dovetail socket.

Each of these solutions will enable a package with a complementary second parcel attachment to attach the package to the latch striker or one or more cavities or dovetail sockets with simple means.

In an aspect, the package storage unit comprises
- one or more pylons, each pylon equipped with at least one of the first parcel attachment means or preferably with a plurality of the first parcel attachment means.

Thereby, a simple pylon can be produced with the one or two or three or four or five or seven or ten or fifteen or twenty or 25 or 30 or more first parcel attachment means. The pylon may be a cylinder with a substantially circular cross-section or substantially rectangular cross-section or with more sides. Pylons can easily be positioned in a series next to one another thereby forming a pattern defined by the first parcel attachment means and the distance between the pylons.

In an aspect, the package storage unit comprises one or more anchor elements, wherein at least one of the one or more pylons extend from the one or more anchor elements.

### Description of the Drawing

Embodiments of the invention will be described in the figures, whereon:
- Fig. 1: illustrates a package with a second parcel attachment means;
- Fig. 2: illustrates a package storage unit;
- Fig. 3: illustrates an automated parcel system; and
- Fig. 4: illustrates a package, and a first parcel attachment means in form of a dovetail socket.

**Detailed Description of the Invention**

| **Item** | **No** |
|---|---|
| Automated parcel system | 10 |
| Package storage unit | 20 |
| First parcel attachment means | 22 |
| Dovetail socket | 24 |
| Pylon | 30 |
| Anchor element | 32 |
| Package | 50 |
| Package gate | 52 |
| Second parcel attachment means | 56 |
| Displaceable member | 70 |

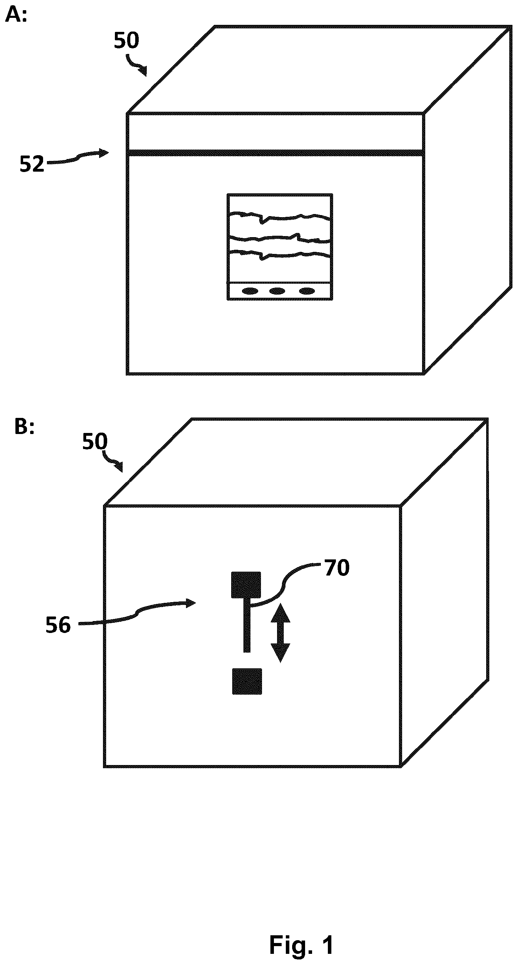

Fig. 1 illustrates a package 50 with a second parcel attachment means 56. The figure discloses a front view (A) and rear view (B). The front includes a label in the present embodiment, but the label could be positioned on any other side.

The package 50 includes a package energy storage powering the package 50. The package energy storage may be a battery unit or a battery pack or similar.

The package 50 further includes a package communication unit adapted for communication with external devices such as a computer or smart device or tablet or smartphone through which the package 50 can receive instructions.

The package 50 further includes a package controller comprising a processor, a computer-readable memory having stored thereon a computer program causing the processor to release the second parcel attachment means 56 from the first parcel attachment means (22) as a function of received instruction from the external devices through the package communication unit.

The release of the second parcel attachment means 56 is performed by displacing the displaceable member 70. The reverse movement of the displaceable member 70 would cause the second parcel attachment means 56 to attach to a first parcel attachment means of a package storage unit.

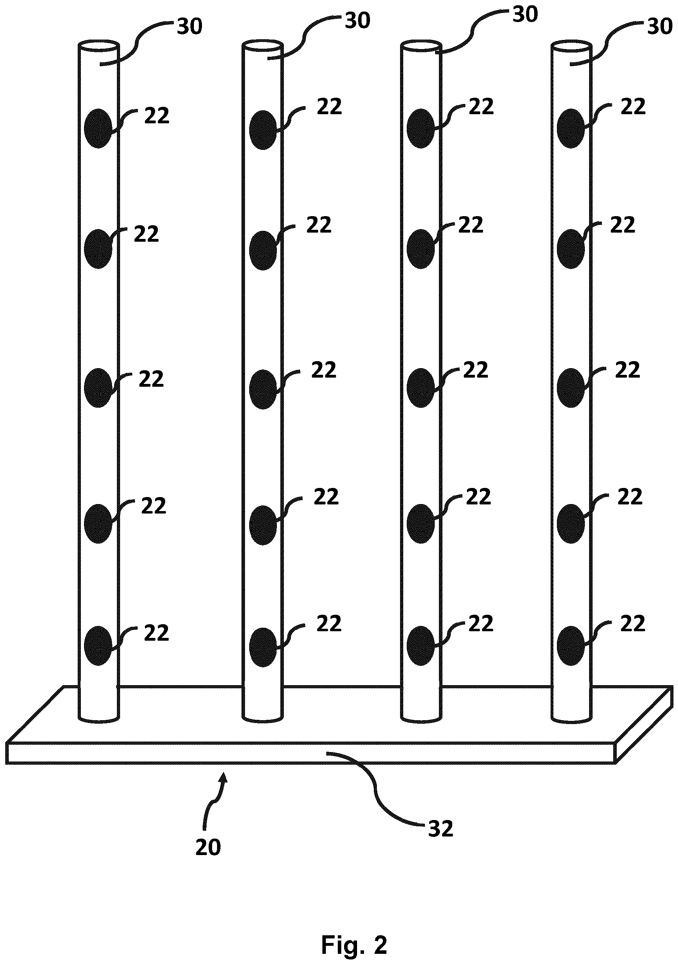

Fig. 2 illustrates a package storage unit 20. The package storage unit 20 comprises a plurality of first parcel attachment means 22 arranged in a pattern. The pattern is in the present case columns and rows forming squares. The pattern could be different but in preferred embodiments the first parcel attachment means 22 define one or more squares.

The first parcel attachment means 22 are positioned on four pylons 30 but the number could be different such as two, three, five, seven, ten, twelve or another number. Each pylon 30 is equipped with five first parcel attachment means 22. The pylons 30 do not need to have the same number of the first parcel attachment means 22.

The package storage unit 20 comprises one or more anchor elements 32, wherein at least one of the one or more pylons 30 extend from the one or more anchor elements 32 in the form of foundation elements. Thereby, the solution can be positioned on any horizontal surface such as pavement.

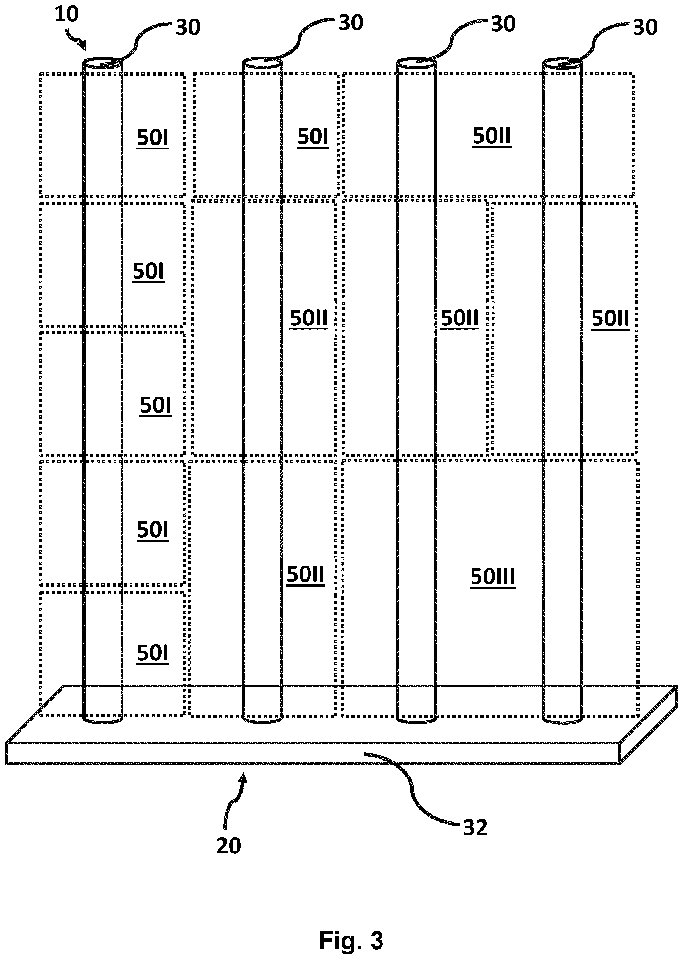

Fig. 3 illustrates an automated parcel system 10. The automated parcel system 10 includes a package storage unit 20 which may be identical to the package storage unit 20 shown in figure 2. The first parcel attachment means are not shown in figure 3 for illustrative purposes. However, the package storage unit 20 does have first parcel attachment means in rows and columns and the first parcel attachment means 22 may be one or more latch strikers and/or one or more cavities and/or dovetail sockets.

Several packages 501, 50II, 50III are attached to the automated parcel system 10. In the shown embodiment, the packages 50I, 50II, 50III have three different sizes. Package 50I is only attached to one first parcel attachment means 22. The package 50II comprises two second parcel attachment means 56 which is attached to two first parcel attachment means 22, wherein the two first parcel attachment means 22 are positioned on two neighboring attachment means 22 on the pylon 30 or on adjacent pylons 30. The package 50III is attached to two, three or four first parcel attachment means 22, hence the package 50III has two, three or four second parcel attachment means 56. The side of the package 50III directly faces four parcel attachment means 22 and the package 50III is attached to two, three or four second parcel attachment means 56.

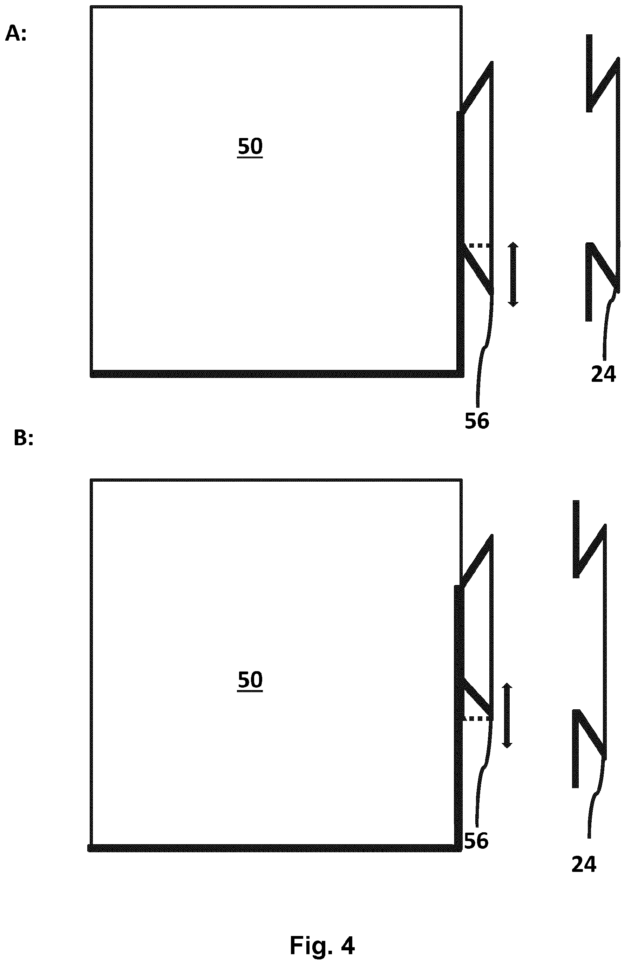

Fig. 4 illustrates a package 50, and a first parcel attachment means 22 in form of a dovetail socket 24. The package 50 has a second parcel attachment means 56 in the form of a dovetail with a retractable pin, which is retracted in figure 4B. The retraction or extension of the pin releases or attaches the package 50 to the first parcel attachment means 22.

## Claims

1. An automated parcel system (10) for storage of parcels and releasing parcels to a recipient, the automated parcel system (10) comprising
- a package storage unit (20) comprising
- a plurality of first parcel attachment means (22) arranged in a pattern, the plurality of first parcel attachment means (22) being attached to one or more surfaces;
- at least one package (50) releasably attached to at least one of the plurality of first parcel attachment means (22), the at least one package (50) comprises
- a package gate (52) enabling access to an internal space of the package (50);
- a second parcel attachment means (56) complimentary to the first parcel attachment means (22), wherein the second parcel attachment means (56) being releasably attached to the first parcel attachment means (22);
- a package energy storage configured for powering the package (50);
- a package communication unit adapted for communication with external devices;
- a package controller comprising a processor and a computer-readable memory having stored thereon a computer program causing the processor to release the second parcel attachment means from the first parcel attachment means (22) as a function of received instruction from the external devices through the package communication unit.

2. An automated parcel system (10) according to claim 1, wherein at least one of the plurality of first parcel attachment means (22) comprises
- a latch striker or
- one or more cavities; or
- a dovetail socket (24).

3. An automated parcel system (10) according to claim 1 or 2, wherein the second parcel attachment means (64) includes a displaceable member (70) and a motor, wherein activation of the motor causes the member (70) to be displaced between an attachment position, wherein the member can engage one of the plurality of first parcel attachment means (22), and a released position, where the member is released from one of the plurality of first parcel attachment means (22).

4. An automated parcel system (10) according to any of claims 1 to 3, wherein the automated parcel system (10) comprises
- one or more pylons (30), each pylon (30) equipped with at least one of the first parcel attachment means (22) or preferably with a plurality of the first parcel attachment means (22).

5. An automated parcel system (10) according to claim 4, wherein the automated parcel system (10) comprises one or more anchor elements (32), wherein at least one of the one or more pylons (30) extend from the one or more anchor elements (30).

6. An automated parcel system (10) according to any of claims 1 to 5, wherein the at least one package (50) comprises two second parcel attachment means (56) engaging two first parcel attachment means (22).

7. An automated parcel system (10) according to any of claims 1 to 6, wherein the second parcel attachment means (56) are rigidly connected to a bottom of the package (50).

8. An automated parcel system (10) according to any of claims 1 to 7, wherein a wire interconnects the first parcel attachment means (22) and the second parcel attachment means (56).

9. A package (50) adapted for being releasably attached to at least one of the plurality of first parcel attachment means (22) of an automated parcel system (50), the at least one package (50) comprises
- a package gate (52) enabling access to an internal space of the package (50);
- a second parcel attachment means (56) for releasable attachment to a first parcel attachment means (22) of an automated parcel system (10), wherein the second parcel attachment means (56) is configured for releasable attachment to a first parcel attachment means (22);
- a package energy storage configured for powering the package (50);
- a package communication unit adapted for communication with external devices;
- a package controller comprising a processor and a computer-readable memory having stored thereon a computer program causing the processor to lock or release the second parcel attachment means as a function of received instruction from the external devices through the package communication unit.

10. A package (50) according to claim 9, wherein the second parcel attachment means (56) includes a displaceable member and a motor, wherein activation of the motor causes the member (70) to be displaced between an attachment position, wherein the member (70) can engage one of the plurality of first parcel attachment means (22), and a released position, where the member (70) is released from one of the plurality of first parcel attachment means (22).

11. A package storage unit (20) for storing one or more packages (50) according to claim 9 to 10, the package storage unit (20) comprising
- a plurality of first parcel attachment means (22) arranged in a pattern, the plurality of first parcel attachment means (22) being attached to one or more surfaces.

12. A package storage unit (20) according to claim 11, wherein at least one of the plurality of first parcel attachment means (22) comprises
- a latch striker; or
- one or more cavities; or
- a dovetail socket.

13. A package storage unit (20) according to any of claims 11 or 12, wherein the package storage unit (20) comprises
- one or more pylons (30), each pylon (30) equipped with at least one of the first parcel attachment means (22) or preferably with a plurality of the first parcel attachment means (22).

14. A package storage unit (20) according to claim 13, wherein the package storage unit (20) comprises one or more anchor elements (32), wherein at least one of the one or more pylons (30) extends from the one or more anchor elements (32).
